# FASCICULE DE BREVET EUROPEEN

(11) **EP 1 205 732 B1**
(45) Date de publication et mention de la délivrance du brevet: **29.03.2006**
(21) Numéro de dépôt: 01402890.6
(22) Date de dépôt: 09.11.2001
(51) Int. Cl.: G01C 21/16, G01S 5/14

(54) **Centrale inertielle de navigation comportant un récepteur GPS intégré**
Inertialnavigationseinheit mit integriertem GPS-Empfänger
Inertial navigation unit comprising an integrated GPS receiver

(30) Priorité: 10.11.2000 FR 0014491
(43) Date de publication de la demande: 15.05.2002
(73) Titulaire: Thales, 75008 Paris (FR)
(72) Inventeur: Coatantiec, Jacques, Thales, Intellectual Property, 94117 Arcueil Cedex (FR); Portal, Didier, Thales, Intellectual Property, 94117 Arcueil Cedex (FR); Flaven, Cedric, Thales, Intellectual Property, 94117 Arcueil Cedex (FR)
(74) Mandataire: Guérin, Michel

(56) Documents cités:
- SCHWARZ K P ET AL: "AIDED VERSUS EMBEDDED A COMPARISON OF TWO APPROACHES TO GPS/INS INTEGRATION" POSITION LOCATION AND NAVIGATION SYMPOSIUM (PLANS),US,NEW YORK, IEEE, vol. -, 11 avril 1994 (1994-04-11), pages 314-322, XP000489358 ISBN: 0-7803-1436-0
- BROATCH S A ET AL: "AN INTEGRATED NAVIGATION SYSTEM MANAGER USING FEDERATED KALMAN FILTERING" PROCEEDINGS OF THE NATIONAL AEROSPACE AND ELECTRONICS CONFERENCE. (NAECON),US,NEW YORK, IEEE, vol. CONF. 43, 20 mai 1991 (1991-05-20), pages 422-426, XP000312679

## Description

L'invention est relative à un appareil destiné à fournir un vecteur d'état d'un engin volant.

Elle concerne plus particulièrement une centrale inertielle de navigation qui intègre un récepteur GPS.

Le vecteur d'état d'un engin volant est un vecteur représentant la position dans l'espace de l'engin, son vecteur vitesse en trois dimensions et les attitudes de l'engin, c'est-à-dire le roulis, le tangage et le cap.

Une centrale inertielle de navigation fournit un vecteur d'état. Mais les données obtenues avec une telle centrale inertielle n'ont pas toujours une précision suffisante. En particulier, on sait qu'une centrale inertielle présente une dérive et qu'au bout d'une heure de navigation, l'erreur sur la position est de quelques centaines de mètres. Cette précision est insuffisante pour certaines applications, notamment quand un avion doit voler à basse altitude. Pour améliorer la précision sur la position, on fait appel à un récepteur GPS ("Global Positioning System") qui, de façon en soi connue, détermine la position de l'avion à partir de signaux fournis par des satellites en orbite terrestre. La précision sur la position fournie par un récepteur GPS est de l'ordre de quelques dizaines de mètres. Cependant, un système GPS ne peut pas être utilisé seul car il est tributaire de la position de l'avion par rapport aux satellites et l'engin peut se trouver dans une position où il ne peut capter les signaux des satellites. C'est pourquoi, on fait appel à des centrales inertielles de navigation intégrant un récepteur GPS.

La combinaison ou hybridation des données fournies par un récepteur GPS et par la centrale inertielle de navigation est obtenue par un filtrage de Kalman. On sait qu'un filtrage de Kalman est un algorithme permettant d'obtenir la meilleure estimation de chaque composant d'un vecteur d'état.

Bien qu'une centrale de navigation combinée à un système GPS fournisse, pour la plupart des applications, un résultat fiable, cette fiabilité n'est pas suffisante pour certaines applications. Il en est ainsi, en particulier, quand l'avion vole en pilotage automatique à très basse altitude et à vitesse élevée. Le pilotage automatique consiste, notamment, à déterminer la position détectée de l'avion par rapport à une carte mémorisée et à piloter automatiquement l'engin de façon à éviter les obstacles indiqués par la carte.

Le faible degré de fiabilité associé au filtre de Kalman a pour origine le fait que les logiciels correspondants sont développés à l'aide de méthodes normalisées, telles que la méthode RTCA-DO-178B niveau C. Pour augmenter la fiabilité, il serait nécessaire de faire appel au niveau A de cette méthode, mais celle-ci n'est pas compatible avec le caractère non-déterministe des filtres de Kalman.

L'invention concerne donc une centrale inertielle de navigation intégrant un récepteur GPS dans laquelle la combinaison des données fournies par la centrale à inertie et par le récepteur GPS est réalisée par filtrage de Kalman et dont le degré de fiabilité associé au vecteur d'état est élevé.

À cet effet, la centrale inertielle intégrant un récepteur GPS comprend, selon l'invention, deux filtres de Kalman présentant des algorithmes différents et installés dans des processeurs distincts et différents avec des compilateurs différents, et des moyens de comparaison des données fournies par les deux filtres de Kalman, les données étant validées si elles sont cohérentes, des mesures de sécurité étant prises si elles ne sont pas cohérentes.

L'utilisation de logiciels dissemblables installés sur des processeurs distincts et de nature différente avec des compilateurs différents augmente sensiblement la fiabilité puisqu'ainsi les erreurs ou pannes des logiciels seront aisément détectées grâce à la comparaison.

Il est à noter ici que par récepteur GPS, il faut comprendre un récepteur qui détermine une position en fonction de signaux reçus de satellites. Ainsi, l'invention n'est pas limitée au système GPS proprement dit ; elle s'applique à des systèmes analogues tels que des récepteurs pour le système GLONASS ou le système EGNOS.

Dans un mode de réalisation, le premier filtrage de Kalman est du type à axes satellites et le second filtrage de Kalman est du type à axes géographiques.

Dans un mode de réalisation, le premier processeur est celui de la centrale inertielle et le second processeur est celui du récepteur GPS.

La cohérence entre les résultats fournis par les deux filtres de Kalman est assurée quand, pour chaque coordonnée du vecteur d'état fournie par le premier filtre de Kalman, la coordonnée correspondante fournie par le second filtre de Kalman se trouve dans l'intervalle de confiance associé à la coordonnée fournie par ce premier filtre et, réciproquement, la coordonnée fournie par le premier filtre de Kalman se trouve dans l'intervalle de confiance associé à la coordonnée correspondante fournie par le second filtre.

Ainsi, l'invention concerne, de façon générale, une centrale inertielle à récepteur GPS ou analogue intégré destinée à fournir un vecteur d'état d'un engin volant, cette centrale comprenant des moyens à filtrage de Kalman pour combiner les données provenant de la centrale inertielle et du récepteur GPS ou analogue et cette centrale inertielle est caractérisée en ce qu'elle comprend un premier (K₁) et un second (K₂) filtres de Kalman, chacun d'eux combinant les données de la centrale inertielle et les données du récepteur GPS ou analogue, les deux filtrages de Kalman utilisant des algorithmes différents, des processeurs différents et des compilateurs différents.

Dans un exemple, le premier filtre de Kalman (K₁) fait appel à un algorithme à axes satellites et le second filtre de Kalman (K₂) fait appel à un algorithme à axes géographiques.

Dans une réalisation, le premier filtre de Kalman fait appel à un processeur de la centrale inertielle et le second filtre de Kalman fait appel à un processeur du récepteur GPS ou analogue.

De préférence, la centrale inertielle comprend des moyens pour comparer les données fournies par les deux filtres de Kalman et pour valider les données fournies par au moins l'un des filtres quand les données ont des valeurs proches et pour fournir un signal d'indication de panne quand les données sont éloignées. Dans ce cas, il est avantageux de prévoir des moyens pour associer à chaque coordonnée du vecteur d'état fournie par chaque filtre de Kalman un intervalle de confiance tel que la coordonnée réelle se trouve avec une probabilité élevée à l'intérieur de cet intervalle, les moyens de comparaison déterminant si, pour chaque coordonnée fournie par le premier filtre de Kalman, la coordonnée correspondante fournie par le second filtre de Kalman se trouve dans l'intervalle de confiance associé à la coordonnée fournie par ce premier filtre et si la coordonnée fournie par le premier filtre de Kalman se trouve dans l'intervalle de confiance associé à la coordonnée correspondante fournie par le second filtre.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma d'une centrale inertielle intégrant un récepteur GPS conforme à l'invention, et
la figure 2 est un schéma expliquant une étape du fonctionnement de la centrale représentée sur la figure 1.

L'exemple de l'invention que l'on va décrire en relation avec les figures concerne une centrale inertielle IN et un récepteur GPS utilisés pour le pilotage automatique d'avions, notamment à très basse altitude.

Cette centrale inertielle hybride fournit un vecteur d'état formé, d'une part, des trois coordonnées de la position de l'avion, ou engin volant, intégrant la centrale hybride, d'autre part du vecteur vitesse à trois dimensions de l'engin volant, et d'autre part enfin, des attitudes de l'avion, c'est-à-dire le roulis, le tangage et le cap. Les coordonnées de position et le vecteur vitesse sont fournis par la centrale inertielle et par le récepteur GPS tandis que les attitudes de l'engin volant sont fournies uniquement par la centrale inertielle.

L'hybridation des données fournies par la centrale inertielle et le récepteur GPS est obtenue par filtrage de Kalman.

Pour fiabiliser les données fournies par filtrage de Kalman, c'est-à-dire pour accroître la confiance qu'on peut accorder aux données fournies par la centrale inertielle à récepteur GPS intégré, on fait appel à deux filtrages de Kalman correspondant tout d'abord à des algorithmes différents, à savoir, dans l'exemple, un algorithme à axes satellites et un algorithme à axes géographiques.

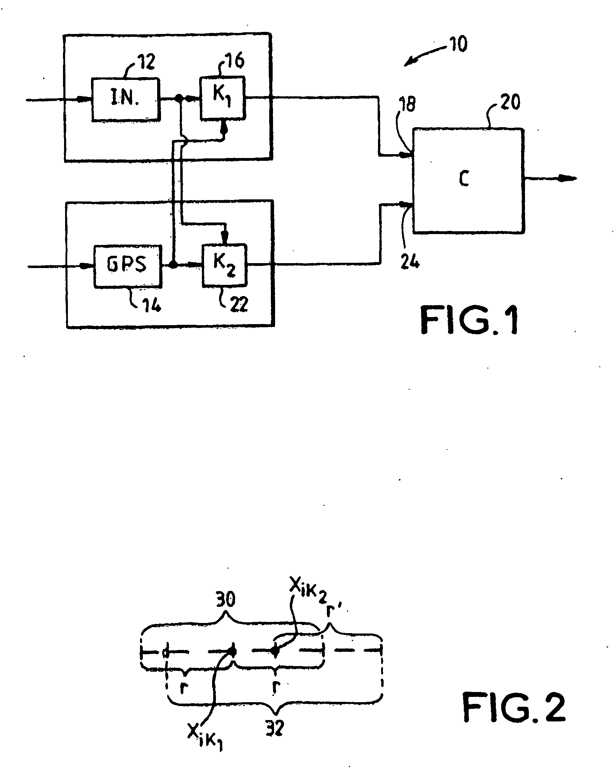

Ainsi, comme représenté sur la figure 1, la centrale inertielle à récepteur GPS intégré 10 comprend, d'une part, un calculateur 12 de mesure des vecteurs d'état fournis par la centrale inertielle et, d'autre part, un récepteur GPS comportant un calculateur 14 des vecteurs de position et de vitesse de l'engin volant. Au calculateur 12 est associé un processeur 16 dans lequel est installé un algorithme de Kalman K₁ du type à axes satellites qui fait appel, d'une part, aux données fournies par le calculateur 12 associé à la centrale inertielle et, d'autre part, aux données du calculateur 14 du récepteur GPS et qui délivre sur sa sortie un vecteur d'état qui est appliqué sur la première entrée 18 d'un comparateur 20. Dans une réalisation, le calculateur 12 et le processeur 16 forment un seul processeur.

Dans le processeur 22 associé au calculateur 14 du récepteur GPS est disposé un second algorithme de Kalman K₂ du type à axes géographiques qui reçoit ses données, d'une part, du calculateur 14 de coordonnées GPS et, d'autre part, du calculateur 12 fournissant le vecteur d'état calculé à partir de la centrale inertielle. Les données fournies par le filtre K₂ sont appliquées sur une seconde entrée 24 du comparateur 20. Dans une réalisation, les calculateurs 12 et 14 font appel au même processeur.

Pour assurer une fiabilité maximale, les processeurs dans lesquels sont installés les filtres K₁ et K₂ sont distincts et d'une nature différente. En outre, ces processeurs utilisent des compilateurs différents.

Les données fournies par les filtres de Kalman K₁ et K₂ sont comparées (bloc 20) de la façon suivante : à chaque coordonnée X_{iK1} du vecteur d'état fourni par le filtre K₁, est associé un intervalle de confiance 30 (figure 2) qui est constitué par l'ensemble des valeurs comprises entre Xi_{K1}-r et X_{iK1}+r. L'intervalle de confiance est déterminé de façon telle qu'il existe une probabilité élevée, par exemple supérieure à 99,9%, que la coordonnée réelle soit à l'intérieur de cet intervalle de confiance.

De même, le filtre K₂ fournit pour la même coordonnée une valeur X_{iK2} à laquelle on associe un intervalle de confiance, c'est-à-dire un ensemble de valeurs comprises entre X_{iK2}-r' et X_{iK2}+r'.

Le comparateur 20 détermine si la coordonnée Xi_{K2} se trouve à l'intérieur de l'intervalle de confiance 30 et si la coordonnée X_{iK1} se trouve à l'intérieur de l'intervalle de confiance 32. S'il en est ainsi, les données estimées sont fiables et disponibles et on valide celles fournies par au moins l'un des filtres. Par contre, si le critère de comparaison mentionné ci-dessus n'est pas satisfait, les données sont estimées d'une fiabilité insuffisante. En outre, l'incohérence entre les données fournies par les deux filtres est une indication de panne.

## Revendications

1. Centrale inertielle à récepteur GPS ou analogue intégré destinée à fournir un vecteur d'état d'un engin volant, cette centrale comprenant des moyens à filtrage de Kalman pour combiner les données provenant de la centrale inertielle et du récepteur GPS ou analogue, **caractérisée en ce qu'**elle comprend un premier (K₁) et un second (K₂) filtres de Kalman, chacun d'eux combinant les données de la centrale inertielle et les données du récepteur GPS ou analogue, les deux filtrages de Kalman utilisant des algorithmes différents, des processeurs distincts et de nature différente et des compilateurs différents.

2. Centrale selon la revendication 1, **caractérisée en ce que** le premier filtre de Kalman (K₁) fait appel à un algorithme à axes satellites et le second filtre de Kalman (K₂) fait appel à un algorithme à axes géographiques.

3. Centrale selon la revendication 1 ou 2, **caractérisée en ce que** le premier filtre de Kalman fait appel à un processeur (16) de la centrale inertielle et le second filtre de Kalman fait appel à un processeur (22) du récepteur GPS ou analogue.

4. Centrale selon l'une quelconque des revendications précédentes, **caractérisée en ce qu'**elle comprend des moyens (20) pour comparer les données fournies par les deux filtres de Kalman et pour valider les données fournies par au moins l'un des filtres quand les données ont des valeurs proches et pour fournir un signal d'indication de panne quand les données sont éloignées.

5. Centrale selon la revendication 4, **caractérisée en ce qu'**elle comporte des moyens pour associer à chaque coordonnée du vecteur d'état fournie par chaque filtre de Kalman un intervalle de confiance tel que la coordonnée réelle se trouve avec une probabilité élevée à l'intérieur de cet intervalle, les moyens de comparaison déterminant si, pour chaque coordonnée fournie par le premier filtre de Kalman, la coordonnée correspondante fournie par le second filtre de Kalman se trouve dans l'intervalle de confiance (30) associé à la coordonnée fournie par ce premier filtre et si la coordonnée fournie par le premier filtre de Kalman se trouve dans l'intervalle de confiance (32) associé à la coordonnée correspondante fournie par le second filtre.

## Patentansprüche

1. Trägheitsnavigationsleitsystem mit GPS- oder ähnlichem Empfänger, das dazu bestimmt ist, einen Zustandsvektor eines Flugkörpers zu liefern, wobei dieses Leitsystem Kalmanfilterungsmittel aufweist, um die vom Trägheitsnavigationsleitsystem und vom GPS- oder ähnlichem Empfänger kommenden Daten zu kombinieren, **dadurch gekennzeichnet, dass** es ein erstes (K₁) und ein zweites Kalmanfilter (K₂) aufweist, die je die Daten des Trägheitsnavigationsleitsystems und die Daten des GPS- oder ähnlichen Empfängers kombinieren, wobei die beiden Kalmanfilterungen unterschiedliche Algorithmen, getrennte und unterschiedliche Prozessoren und unterschiedliche Compiler verwenden.

2. Leitsystem nach Anspruch 1, **dadurch gekennzeichnet, dass** das erste Kalmanfilter (K₁) einen Algorithmus mit Satellitenachsen und das zweite Kalmanfilter (K₂) einen Algorithmus mit geographischen Achsen verwendet.

3. Leitsystem nach Anspruch 1 oder 2, **dadurch gekennzeichnet, dass** das erste Kalmanfilter einen Prozessor (16) des Trägheitsnavigationsleitsystems und das zweite Kalmanfilter einen Prozessor (22) des GPS- oder ähnlichen Empfängers verwendet.

4. Leitsystem nach einem der vorhergehenden Ansprüche, **dadurch gekennzeichnet, dass** es Mittel (20) aufweist, um die von den beiden Kalmanfiltern gelieferten Daten zu vergleichen und um die von mindestens einem der Filter gelieferten Daten zu validieren, wenn die Daten nahe beieinander liegende Werte haben, und um ein Pannenanzeigesignal zu liefern, wenn die Daten voneinander entfernt sind.

5. Leitsystem nach Anspruch 4, **dadurch gekennzeichnet, dass** es Mittel aufweist, um jeder von jedem Kalmanfilter gelieferten Koordinate des Zustandsvektors ein derartiges Vertrauensintervall zuzuordnen, dass die reale Koordinate sich mit einer hohen Wahrscheinlichkeit innerhalb dieses Intervalls befindet, wobei die Vergleichsmittel bestimmen, ob für jede vom ersten Kalmanfilter gelieferte Koordinate die entsprechende vom zweiten Kalmanfilter gelieferte Koordinate sich in dem Vertrauensintervall (30) befindet, das der von diesem ersten Filter gelieferten Koordinate zugeordnet ist, und ob die vom ersten Kalmanfilter gelieferte Koordinate sich in dem Vertrauensintervall (32) befindet, das der entsprechenden Koordinate zugeordnet ist, die vom zweiten Filter geliefert wird.

## Claims

1. Inertial unit with integrated GPS or analogous receiver intended to provide a state vector of a flying craft, this unit comprising Kalman filtering means for combining the data originating from the inertial unit and from the GPS or analogous receiver, **characterized in that** it comprises a first (K₁) and a second (K₂) Kalman filter, each of them combining the data of the inertial unit and the data of the GPS or analogous receiver, the two Kalman filterings using different algorithms, distinct processors of different nature and different compilers.

2. Unit according to Claim 1, **characterized in that** the first Kalman filter (K₁) uses an algorithm employing satellite axes and the second Kalman filter (K₂) uses an algorithm employing geographical axes.

3. Unit according to Claim 1 or 2, **characterized in that** the first Kalman filter uses a processor (16) of the inertial unit and the second Kalman filter uses a processor (22) of the GPS or analogous receiver.

4. Unit according to one of the preceding claims, **characterized in that** it comprises means (20) for comparing the data provided by the two Kalman filters and for validating the data provided by at least one of the filters when the data have similar values and for providing a fault indication signal when the data are far removed.

5. Unit according to Claim 4, **characterized in that** it comprises means for associating a confidence interval with each state vector coordinate provided by each Kalman filter, such that the real coordinate lies inside this interval with a high probability, the means of comparison determining whether, for each coordinate provided by the first Kalman filter, the corresponding coordinate provided by the second Kalman filter lies in the confidence interval (30) associated with the coordinate provided by this first filter and whether the coordinate provided by the first Kalman filter lies in the confidence interval (32) associated with the corresponding coordinate provided by the second filter.
